# EUROPÄISCHE PATENTSCHRIFT

(11) **EP 2 024 728 B1**
(45) Veröffentlichungstag und Bekanntmachung des Hinweises auf die Patenterteilung: **26.08.2009**
(21) Anmeldenummer: 07724495.2
(22) Anmeldetag: 24.04.2007
(51) Int. Cl.: G01N 21/01, G01N 21/03, G01N 21/84

(54) **VERFAHREN UND DETEKTIONSVORRICHTUNG ZUR BILDGEBENDEN ERFASSUNG EINER PROBE**
METHOD AND DETECTION DEVICE FOR THE IMAGING DETECTION OF A SAMPLE
PROCÉDÉ ET DISPOSITIF DE DÉTECTION POUR DÉTECTER UN ÉCHANTILLON PAR IMAGERIE

(30) Priorität: 15.05.2006 DE 102006022878
(43) Veröffentlichungstag der Anmeldung: 18.02.2009
(73) Patentinhaber: Sartorius Stedim Biotech GmbH, 37079 Göttingen (DE)
(72) Erfinder: BAUMFALK, Reinhard, 37083 Göttingen (DE); REIF, Oscar-Werner, 30173 Hannover (DE); WURM, Florian, CH-1092 Belmont-sur-Lausanne (CH); DE JESUS, Maria, 1022 Chavannes (CH); JORDAN, Martin, 1024 Ecublens (CH); STETTLER, Matthieu c/o Rita Gessner, 1095 Lutry (CH); OBERMANN, Stefan, 37139 Adelebsen (DE)
(86) Internationale Anmeldenummer: PCT/EP2007/003565
(87) Internationale Veröffentlichungsnummer: WO 2007/131595

(56) Entgegenhaltungen:
- EP-A- 1 221 607
- US-B1- 6 479 239

## Beschreibung

Die Erfindung betrifft ein Verfahren zum bildgebenden Erfassen einer Probe in einem wenigstens bereichsweise transparenten, länglich erstreckten Probengefäß mittels einer Detektionsanordnung, die umfasst:
- einen Probengefäßhalter zur stabilen Halterung des Probengefäßes in einem Gehäuse, wobei der Probengefäßhalter im Bereich wenigstens einer Längsseite des Probengefäßes ein die Längsseite wenigstens bereichsweise freigebendes Seitensichtfenster sowie im Bereich wenigstens einer Stirnseite des Probengefäßes ein diese Stirnseite wenigstens bereichsweise freigebendes Stirnsichtfenster aufweist,
- eine wenigstens eine Lichtquelle umfassende erste Beleuchtungsanordnung zum Beleuchten des Probengefäßes, wobei die Lichtquelle dem Stirnsichtfenster benachbart angeordnet ist und die Probe im Probengefäß mittels der Lichtquelle durch das Stirnsichtfenster beleuchtbar ist,
- einen bildgebenden Photodetektor zur wenigstens bereichsweisen, bildgebenden Erfassung des aufgrund der Beleuchtung von der Probe bzw. dem Probengefäß durch ein Seitensichtfenster ausgehenden Lichtes,
- eine digitale Datenverarbeitungseinheit zur Bildverarbeitung und Steuerung des Photodetektors.

Die Erfindung betrifft weiter eine Detektionsvorrichtung zum bildgebenden Erfassen einer Probe in einem wenigstens bereichsweise transparenten, länglich erstreckten Probengefäß, umfassend:
- einen Probengefäßhalter zur stabilen Halterung des Probengefäßes in einem Gehäuse, wobei der Probengefäßhalter im Bereich wenigstens einer Längsseite des Probengefäßes ein die Längsseite wenigstens bereichsweise freigebendes Seitensichtfenster sowie im Bereich wenigstens einer Stirnseite des Probengefäßes ein diese Stirnseite wenigstens bereichsweise freigebendes Stirnsichtfenster aufweist,
- eine wenigstens eine Lichtquelle umfassende erste Beleuchtungsanordnung zum Beleuchten des Probengefäßes, wobei die Lichtquelle dem Stirnsichtfenster benachbart angeordnet ist und die Probe im Probengefäß mittels der Lichtquelle durch das Stirnsichtfenster beleuchtbar ist,
- einen bildgebenden Photodetektor zur wenigstens bereichsweisen, bildgebenden Erfassung des aufgrund der Beleuchtung von der Probe bzw. dem Probengefäß durch ein Seitensichtfenster ausgehenden Lichtes,
- eine digitale Datenverarbeitungseinheit zur Bildverarbeitung und Steuerung des Photodetektors.

Die US 6,479,239 B1 offenbart derartige Verfahren und Vorrichtungen. Für die Durchführung optischer Messungen werden gattungsgemäße Detektionsvorrichtungen vielfach verwendet, wobei unterschiedliche Beleuchtungs- und Detektionsmodi zum Einsatz kommen. Dabei wird ein Probengefäß, das typischerweise z.B. eine Küvette oder ein Zentrifugationsröhrchen ist, in einem Probengefäßhalter in einem Gehäuse, das gegen den Einfall von Außenlicht geschützt ist, festgelegt. Der Probengefäßhalter kann dabei zur direkten Aufnahme eines Probengefäßes eingerichtet sein oder eine separate, mobile Haltereinheit umfassen, die das Probengefäß aufnimmt und mit diesem in eine Halterung in dem Gehäuse einsetzbar ist.

Da es in der Regel gilt, optische Eigenschaften einer in dem Probengefäß enthaltenen Probe zu vermessen, ist das Probengefäß üblicherweise wenigstens im Bereich einer oder mehrerer seiner Seitenflächen transparent. Der Probengefäßhalter, der normalerweise aus nichttransparentem Material gefertigt ist, weist ein oder mehrere den transparenten Gefäßflächen entsprechende Seitensichtfenster auf. Die Seitensichtfenster sind meist als reine Durchbrüche durch eine Gefäßhalterwand ausgebildet. Die Begriffe "Licht", "optisch" und "transparent" sind in diesem Zusammenhang nicht auf den häufig als optischen Spektralbereich bezeichneten Bereich zwischen ca. 400 und 800 Nanometer Wellenlänge des elektromagnetischen Spektrums beschränkt. Insbesondere bei Verwendung von Farbstoffen kann auch Licht des infraroten oder ultravioletten Spektrums zur Detektion eingesetzt werden. Die Begriffe "optisch" und "transparent" sind dann entsprechend zu interpretieren.

Zur bildgebenden Erfassung der Probe ist weiter ein bildgebender Photodetektor vorgesehen, der im Gehäuse angeordnet oder lichtdicht an diesem angeschlossen sein kann. Als Photodetektor kommt insbesondere eine elektronische Kamera, wie z.B. eine CCD-Kamera (charge coupled device) in Frage, die zu ihrer Steuerung und zur Bildverarbeitung und -auswertung an eine digitale Datenverarbeitungseinrichtung angeschlossen oder anschließbar ist. Die digitale Datenverarbeitungseinrichtung kann z.B. ein externer Computer oder auch ein in dem Gehäuse integrierter Mikroprozessor o.ä. sein.

Weiter befindet sich in dem Gehäuse eine Beleuchtungsanordnung, die eine oder mehrere Lichtquellen umfassen kann. Die Beleuchtungsanordnung dient der definierten Bestrahlung der Probe bzw. des Probengefäßes mit einem Beleuchtungslicht. Das in Folge der Beleuchtung von der Probe und/oder dem Probengefäß abgegebene Licht kann dann von dem Photodetektor erfasst werden.

Es ist bekannt, optische Eigenschaften von Proben/Probengefäßen in Reflexion, Transmission, Fluoreszenz, Phosphoreszenz, Streuung etc. zu messen. Entsprechend sind Beleuchtungs- und Detektionsstrahlengang und ihre konkreten Komponenten, wie Beleuchtungsanordnung, Seitensichtfenster, Detektor etc. vom Fachmann anzupassen.

Die vorgenannte US 6,479,239 B1 offenbart als einen grundlegenden optischen Aufbau eine Beleuchtung der Probe durch ein Stirnsichtfenster mittels einer benachbart zu dem Stirnsichtfenster angeordneten Lichtquelle und eine Detektion des von der Probe und/oder dem Probengefäß abgestrahlten Lichtes durch ein Seitensichtfenster. Als Alternative hierzu werden Beleuchtung und Detektion, insbesondere rechtwinklig zueinander, durch Seitensichtfenster hindurch vorgeschlagen.

Die DE 102 18 693 A1 offenbart eine Vorrichtung, bei der ein Probengefäß von mehreren großflächigen, diffusen Lampen unter verschiedenen Einfallswinkeln seitlich beleuchtet wird, um Reflexionen an der Probengefäßwand zu verhindern. Mit zwei Photodetektoren wird bei einem so beleuchteten Gefäß einerseits ein Etikett mit einer Probenkennzeichnung gelesen und andererseits ein Füllstand der Probe durch Bildaufnahme und -auswertung ermittelt.

Die EP 0 754 945 B1, die in deutscher Übersetzung als DE 695 18 834 T2 veröffentlicht ist, offenbart ein Verfahren zur optischen Bestimmung der Sedimentationsrate von Erythrozyten in einer Blutprobe durch Messung der unterschiedlichen Lagen der Phasengrenzflächen zwischen Plasma und Zellkuchen zu vorbestimmten Zeiten und Schätzung auf Basis einer Polynomialinterpolation. Die Lagenerfassung erfolgt durch Abbildung des Probengefäßes im Kontrastbild gegen Hintergrundbeleuchtung.

Die DE 35 20 962 A1 offenbart ein Verfahren zur Bestimmung der Sedimentationsgeschwindigkeit von Partikeln in einer flüssigen Probe, die auf eine Mehrzahl von Probenröhrchen aufgeteilt ist, die in einer motorisch drehbaren Trommel angeordnet sind. Durch Beleuchtung der Trommel wird die Grenzfläche zwischen der Flüssigkeit und den Sedimentierten Partikeln reflektiv auf einen flächigen, bildgebenden Photodetektor projiziert, dessen Ausgangssignal automatisiert gelesen und zur Ermittlung der Sedimentationsrate verarbeitet wird.

Die US 5,003,488 offenbart ein ähnliches Verfahren, das jedoch in Transmission arbeitet und bei dem die Lichtquelle im Inneren der Trommel zur Durchstrahlung der Proben angeordnet ist.

Die EP 0 637 744 B1 offenbart ein Bildverarbeitungsverfahren zur Erkennung von Aglutinierungsmustern in einer Probe.

Die US 6,762,842 B2 offenbart einen optischen Aufbau, bei dem das Probengefäß durch ein oberes Stirnfenster beleuchtet wird und die Detektion durch ein gegenüber liegendes Stirnfenster erfolgt. Dieser Aufbau ist allerdings nicht für eine bildgebende Probenerfassung geeignet.

Einen ähnlichen optischen Aufbau offenbart die US 5,013,155, die zusätzlich die Fortpflanzung des Lichtes in der als Lichtleiter unter Ausnutzung der Totalreflexion wirkenden Probengefäßwand beschreibt.

Die US 3,914,985 offenbart ein mehrteiliges Probengefäß mit einem äußeren und einem inneren Teil, wobei der innere Teil aus einer erweiterten Kammer und einem mit der erweiterten Kammer verbindbaren Kapillarteil besteht.

Die DE 203 20 951 U1 offenbart ein einwandiges Probengefäß mit einem erweiterten Abschnitt und einem daran anschließenden Kapillarabschnitt.

Die DE 100 30 927 C1 offenbart einen nicht-bildgebenden Biosensor, dessen sensitives Element als ein Lichtleiter ausgebildet ist, dessen Totalreflexionseigenschaften in Abhängigkeit von der zu sensierenden Konzentration eines umgebenden Stoffes variieren, sodass eine Messung der optischen Verlustleistung Rückschlüsse auf die Stoffkonzentration erlaubt.

Die EP 1 221 607 A1 beschreibt eine Detektionsvorrichtung zum bildgebenden Erfassen einer Probe in einem transparenten, länglich erstreckten Probengefäß mit einem Probengefäßhalter, einer eine erste Lichtquelle umfassenden ersten Beleuchtungsanordnung zur Beleuchtung des Probengefäßes durch ein Stirnsichtfenster (von unten), einer eine zweite Lichtquelle umfassenden zweiten Beleuchtungsanordnung zur Beleuchtung des Probengefäßes von der Seite, einem bildgebenden Photodetektor zur bildgebenden Erfassung des von dem Probengefäß durch das Stirnsichtfenster ausgehenden Lichts und einer digitalen Datenverarbeitungseinheit zur Bildverarbeitung und Steuerung des Photodetektors. Je nach den Transmissionseigenschaften der Probe wird entweder die Beleuchtung von der Seite oder die Beleuchtung von unten gewählt.

Aus dem Bereich der medizinischen Diagnostik ist das so genannte PCV-Verfahren bekannt. PCV steht für "packed cell volume" und beschreibt den Anteil an Feststoffen in Form eines verdichteten Zellkuchens an dem Gesamtvolumen einer Probe. Weithin bekannt ist der als Hämatokrit bezeichnete PCV-Wert des Blutes. Zu seiner Bestimmung wird eine Blutprobe in einem meist zylindrischen Probenröhrchen zentrifugiert, bis sich der Festbestandteil des Blutes als verdichteter Zellkuchen am Röhrchenboden abgesetzt hat. Der auch als Überstand bezeichnete Flüssiganteil schwimmt auf dem Zellkuchen. Zur Bestimmung des Hämatokrit wird das Volumen des Zellkuchens durch Messung seiner Höhe in dem Probengefäß bestimmt und in ein prozentuales Verhältnis zum Gesamtvolumen der Probe gesetzt.

Für Zellkulturen mit geringem Feststoffanteil verwendet man bei der PCV-Bestimmung Probengefäße, die an ihrem unteren Ende in einer Kapillare auslaufen, um eine Skalenspreizung im Bereich des Zellkuchens zu erreichen. Hierdurch sollen Ablesefehler reduziert werden.

Kritisch insbesondere bei der automatisierten Messung der Zellkuchenhöhe ist eine geeignete Beleuchtung. Bekannten Detektionsvorrichtungen, in denen Beleuchtung und Detektion, unabhängig vom Detektionsmodus, durch die Seitensichtfenster erfolgen, versagen hier leicht. Im

Bereich der Kapillare ist das Verhältnis von Wandstärke des Probengefäßes zur Probendicke in Beleuchtungsrichtung sehr groß. Das bedeutet, dass optische Signale, die allein auf das Probengefäß zurückgehen, wie z.B. Reflexionen, groß sind im Vergleich zu dem eigentlich interessierenden Signal, das von der Probe ausgeht. Diese Störsignale werden noch dadurch verstärkt, dass die Gefäßwand im Bereich der Kapillare eine sehr starke Krümmung zeigt, was die Reflexionen weiter verstärkt. Abhilfe könnte geschaffen werden mit optisch sehr hochwertig gefertigten Probengefäßen, was jedoch eine aufwendige Herstellung unter Verwendung teurer Materialien erfordert. Dies steht im Widerspruch zu den sonstigen praktischen Anforderungen an die PCV-Röhrchen, die als kostengünstige Einweggefäße aus transparentem Kunststoff gefertigt werden.

Das gattungsgemäße Verfahren und die gattungsgemäße Vorrichtung, bei denen die Probe axial beleuchtet wird, eignen sich zur automatisierten Probenauswertung ohnehin nur, sofern die Probengefäße hochpräzise gefertigt und die Probenhalterung exakt reproduzierbar sind. Bei dieser Beleuchtungsart kann nämlich im Wesentlichen nur die absolute Lage der ggf. fluoreszierenden Probe im Raum, nicht jedoch ihr Verhältnis zum Probengefäß erfasst werden, was die oben angesprochene Fertigungspräzision zwingend erforderlich macht. Zudem sind die mit gattungsgemäßen Vorrichtungen und Verfahren erzeugten und zur automatisierten Auswertung geeigneten Bilder wenig anschaulich und eignen sich nicht zur visuellen Auswertung oder Überprüfung von Ergebnissen oder zur anschaulichen Dokumentation.

Es ist die Aufgabe der vorliegenden Erfindung, die gattungsgemäßen Verfahren und Vorrichtungen derart weiterzubilden, dass eine direkte Beziehung zwischen den räumlichen Lagen der Probe und des Probengefäßes herstellbar wird.

Die oben erstgenannte Aufgabe wird in Verbindung mit den Merkmalen des Oberbegriffs von Anspruch 1 dadurch gelöst, dass eine zweite Beleuchtungsanordnung mit wenigstens einer Lichtquelle vorgesehen ist, mittels der die Probe und/oder das Probengefäß durch ein Seitensichtfenster hindurch beleuchtbar ist, und wobei das Verfahren die Schritte umfasst:
- Beleuchten des Probengefäßes mit der Probe, mittels der ersten Beleuchtungsanordnung,
- Aufnehmen eines ersten Bildes des mittels der ersten Beleuchtungsanordnung beleuchteten Probengefäßes mit des Probe mittels des Photodetektors,
- Beleuchten des Probengefäßes mit der Probe mittels der zweiten Beleuchtungsanordnung,
- Aufnehmen eines zweiten Bildes des mittels der zweiten Beleuchtungsanordnung beleuchteten Probengefäßes mit der Probe mittels des Photodetektors,
- Überlagern des ersten und des zweiten Bildes mittels der digitalen Datenverarbeitungseinrichtung und
- Darstellen des resultierenden Überlagerungsbildes auf einer mit der digitalen Datenverarbeitungseinrichtung verbundenen Anzeigeeinrichtung.

Die Aufgabe wird weiter in Verbindung mit den Merkmalen des Oberbegriffs von Anspruch 3 dadurch gelöst, dass eine zweite Beleuchtungsanordnung mit wenigstens einer Lichtquelle vorgesehen ist, mittels der das Probengefäß durch ein Seitensichtfenster hindurch beleuchtbar ist, und dass der Photodetektor derart angesteuert wird, dass er
- ein erstes Bild des mittels der ersten Beleuchtungsanordnung beleuchteten Probengefäßes mit der Probe aufnimmt,
- ein zweites Bild des mittels der zweiten Beleuchtungsanordnung beleuchteten Probengefäßes mit der Probe aufnimmt und die digitale Datenverarbeitungseinheit
- das erste und das zweite Bild überlagert und
- ein resultierendes Überlagerungsbild auf einer mit ihr verbundenen Anzeigeeinrichtung darstellt.

Die Merkmale und Vorteile der erfindungsgemäßen Vorrichtung und des erfindungsgemäßen Verfahrens sollen nachfolgend gemeinsam erläutert werden.

Der Probenhalter weist ein erstes Stirnsichtfenster auf, d.h. eine Öffnung, die es erlaubt, dass Beleuchtungslicht auf eine Stirnfläche des Probengefäßes fällt. Korrespondierend hierzu ist vorgesehen, dass auch die Beleuchtungsanordnung entsprechend ausgebildet ist. Das bedeutet, dass es möglich und vorgesehen ist, dass die Beleuchtung von Probe bzw. Probengefäß durch das erste Stirnsichtfenster des Probengefäßes erfolgt. Dem liegt die Erkenntnis zugrunde, dass bei einer derartigen Beleuchtung zumindest ein erheblicher Anteil des Beleuchtungslichtes die Stirnfläche des Probengefäßes nicht in Normalenrichtung durchläuft, sondern in die als Lichtleiter wirkenden Kapillarwände des Probengefäßes eingekoppelt wird und sich dort gemäß den Gesetzen der Totalreflexion fortpflanzt. Dabei ist die Totalreflexion an der Kapillaraußenfläche aufgrund des großen Brechungsindexunterschiedes zwischen dem Kapillarmaterial und dem umgebenden Medium, in der Regel Luft, nahezu perfekt, d.h. es wird wenig oder gar kein Licht nach außen ausgekoppelt und vom Detektor aufgefangen. An der Innenfläche der Kapillare ist die Brechungsindexstufe jedoch wesentlich kleiner, da hier eine Grenzfläche zu der Probe, d.h. im Fall einer PCV-Messung zu dem Zellkuchen bzw. dem Überstand mit jeweils deutlich höherem Brechungsindex als Luft, vorliegt. Daher ist hier der zum Lot gemessene Totalreflexionsgrenzwinkel deutlich kleiner, sodass Licht effizient in die Probe hinein und über die gesamte Probenhöhe hinweg ausgekoppelt wird. Damit wird die Probe in ihrer Gesamtheit senkrecht zur Kapillarenachse beleuchtet, ohne dass sich die durch die herkömmliche Beleuchtung durch die Seitensichtfenster bedingten, störenden Reflexionen der Probengefäßwand ergeben. Durch diese Reduzierung der Störungen wird die Messqualität insgesamt deutlich verbessert.

Erfindungsgemäß ist vorgesehen dass die Detektionsvorrichtung zusätzlich eine zweite Beleuchtungsanordnung mit wenigstens einer Lichtquelle aufweist, mittels der das Probengefäß durch das Seitensichtfenster hindurch beleuchtbar ist.

Es werden erfindungsgemäß ein Bild bei Beleuchtung mit der ersten Beleuchtungsanordnung und ein Bild bei Beleuchtung mit der zweiten Beleuchtungsanordnung aufgenommen und diese Bilder zu einem Kombinationsbild überlagert. Dem Benutzer wird hierbei ein Überlagerungsbild gezeigt, welches für ihn anschaulich das Probengefäß, z.B. aufgenommen mit herkömmlicher Reflexionsbeleuchtung, und den vermessenen Gefäßinhalt, d.h. die Probe, darstellt. Der Vorteil der Erfindung liegt u.a. darin, dass das Überlagerungsbild unabhängig von der Fertigungspräzision des Probengefäßes oder der Detektionsvorrichtung stets die räumliche Beziehung zwischen Probe und Probengefäß wiedergibt und somit eine Vermessung der Probe im Probengefäß unabhängig von der absoluten räumlichen Lage und auf visuell anschauliche Weise erlaubt.

Vorzugsweise werden in der Datenverarbeitungseinrichtung Bildverarbeitungsalgorithmen auf dem ersten, d.h. in Stirnsichtfensterbeleuchtung aufgenommenen Bild, zur Vermessung und Auswertung des Messergebnisses ausgeführt. Solche Ergebnisse, die z.B. bei der PCV-Messung die Grenzen zwischen Zellkuchen und Überstand oder zwischen einzelnen Zellkuchenabschnitten umfassen können, können bei einer vorteilhaften Weiterbildung der Erfindung als graphische Elemente, z.B. als graphische Grenzlinien, in das angezeigte Überlagerungsbild mit eingeblendet werden.

Bevorzugt ist vorgesehen, dass der Probengefäßhalter im Bereich der unteren Stirnseite des Probengefäßes ein die untere Stirnseite wenigstens bereichsweise freigebendes erstes Stirnsichtfenster aufweist und wenigstens eine Lichtquelle der ersten Beleuchtungsanordnung dem ersten Stirnsichtfenster benachbart angeordnet ist, mittels der das Probengefäß durch das erste Stirnsichtfenster beleuchtbar ist. Dies ist in der besonders effizienten Einkopplung begründet, die über die Bodenfläche des Probengefäßes, insbesondere, wenn diese als Lichteinkoppelfläche ausgebildet ist, möglich ist.

Gemäß einer besonderen Ausführungsform der Erfindung ist vorgesehen, dass der Probengefäßhalter im Bereich der oberen Stirnseite des Probengefäßes ein die obere Stirnseite wenigstens bereichsweise freigebendes zweites Stirnsichtfenster aufweist und dem ersten und dem zweiten Stirnsichtfenster benachbart je eine Lichtquelle der ersten Beleuchtungsanordnung angeordnet ist, mittels der das Probengefäß durch diese Stirnsichtfenster beleuchtbar ist. Mit anderen Worten wird bei dieser Ausführungsform der Kern der Erfindung beidseitig angewendet. Die Probe wird von den beiden Stirnseiten des Probengefäßes her gleichzeitig beleuchtet. Dabei erfolgt die Lichteinkopplung von oben über die obere Randfläche des Probengefäßes.

Bevorzugt ist vorgesehen, dass wenigstens eine Lichtquelle eine LED (Licht emittierende Diode) ist. Dies ist eine besonders kostengünstige Beleuchtungsvariante.

Alternativ oder zusätzlich kann vorgesehen sein, dass wenigstens eine Lichtquelle ein Ausgang eines Lichtleiters ist, der an eine externe Lichterzeugungsvorrichtung anschließbar ist. Mit dieser Maßnahme wird eine größere Flexibilität der Beleuchtung erreicht, die so auf einfache Weise an die speziellen Bedingungen und Erfordernisse der Probe abgestimmt werden kann. Als externe Lichtquellen bieten sich aus Kostengründen ebenfalls LEDs an. Es können jedoch auch beliebige andere Lichtquellen, wie z.B. Laser oder Entladungslampen, ggf. mit geeigneten Filtersätzen, verwendet werden. Selbstverständlich ist auch bei der integrierten Variante der Einsatz besonderer Filter, die insbesondere für Fluoreszenz- und Phosphoreszenzmessungen erforderlich sind, möglich.

Bevorzugt weist der Probengefäßhalter an eine nichtradialsymmetrische Form des Probengefäßes angepasste Zentrierflanken auf. Damit wird eine stets gleiche Ausrichtung baugleicher Probengefäße gewährleistet, was eine hohe Reproduzierbarkeit der Messergebnisse gewährleistet. Die Zentrierflanken können je nach Ausgestaltung des Probengefäßhalters mit oder ohne separate, mobile Halteeinrichtung an dieser oder einer zur direkten Aufnahme des Probengefäßes eingerichteten Halterung angebracht sein.

Günstigerweise hat der Probengefäßhalter eine Mehrzahl von Aufnahmebereichen zur Aufnahme je eines Probengefäßes und jeder Aufnahmebereich ist mit zwei Stirnsichtfenstern und wenigstens einem Seitensichtfenster ausgestattet. Dies ermöglicht eine Reduzierung der Handhabungsschritte, insbesondere wenn, wie bevorzugt vorgesehen, der Probengefäßhalter zur Ausrichtung der Aufnahmebereiche motorisch bewegbar ist, wobei die motorische Bewegung vorzugsweise von einer programmierbaren Steuereinheit angesteuert wird. Die Proben werden dabei nacheinander in eine Messstellung gefahren, in der sie erfindungsgemäß beleuchtet und vermessen werden.

Alternativ ist es auch möglich, die oben erläuterte Beleuchtung entsprechend der Mehrzahl von Aufnahmebereichen zu erweitern und die Bildgebungsoptik des Photodetektors so zu wählen, dass gleichzeitig mehrere Proben vermessen werden können. Mit anderen Worten ist bei dieser Alternative vorgesehen, dass jedem Aufnahmebereich wenigstens eine Lichtquelle der ersten Beleuchtungsanordnung zur Beleuchtung des jeweiligen Probengefäßes durch ein zugeordnetes Stirnsichtfenster zugeordnet ist.

Auch Kombinationen der vorgeschriebenen Alternativen sind denkbar.

Die mehreren Aufnahmebereiche können vorzugsweise linear oder ringförmig nebeneinander angeordnet sein. Während sich die erstgenannte Variante insbesondere zur simultanen Vermessung mehrerer Proben anbietet, ist die zweitgenannte Variante insbesondere für einen trommelartig rotierenden, motorischen Antrieb geeignet.

Weitere Merkmale und Verteile der Erfindung ergeben sich aus der nachfolgenden speziellen Beschreibung und den beigefügten Zeichnungen, in denen bevorzugte Ausführungsformen der Erfindung beispielhaft veranschaulicht sind.

### In den Zeichnungen zeigen:

- Figur 1:: eine erste perspektivische Darstellung einer Ausführungsform der Erfindung;
- Figur 2:: eine zweite perspektivische Darstellung einer Ausführungsform der Erfindung;
- Figur 3:: eine schematische Darstellung einer ersten Ausführungsform einer mobilen Haltereinheit;
- Figur 4:: eine schematische Darstellung einer bevorzugten Beleuchtungsweise einer Probe;
- Figur 5:: eine perspektivische Darstellung einer zweiten Ausführungsform einer mobilen Haltereinheit.

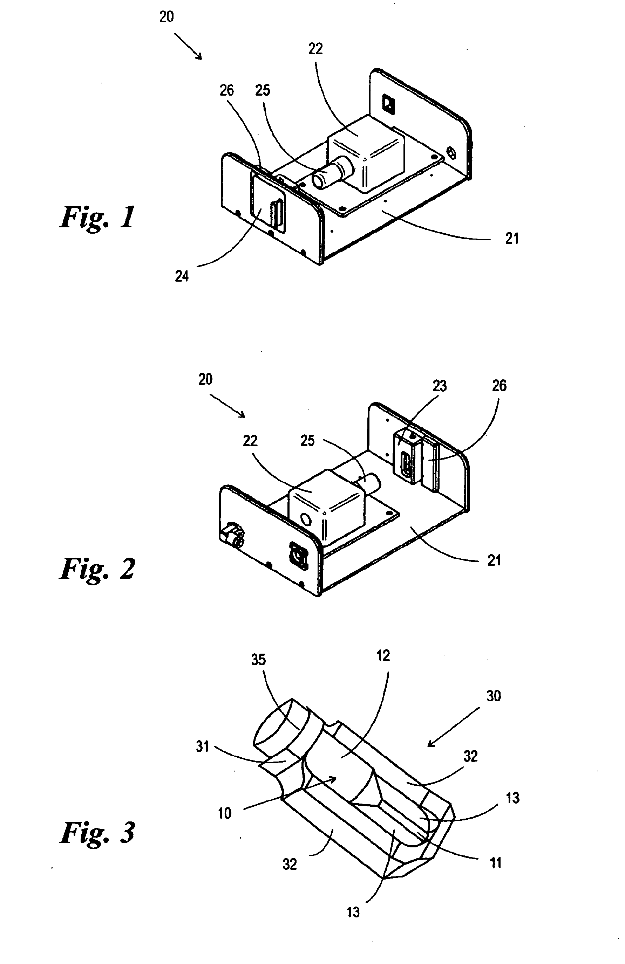

Figuren 1 und 2 zeigen eine bevorzugte Ausführungsform einer nachfolgend als Lesegerät 20 bezeichneten Detektionseinheit zur Erfassung einer Probe und vorzugsweise auch zur Auswertung der erfassten Messwerte. Das Gerät umfasst ein vorzugsweise lichtdichtes Gehäuse 21, von dem in den Figuren 1 und 2 lediglich ein unterer Trägerteil dargestellt ist. Ein vorzugsweise vorgesehener korrespondierender Deckel ist in den Figuren 1 und 2 nicht gezeigt. Das Lesegerät 20 umfasst weiter einen bildgebenden Sensor 22, der vorzugsweise als flächige CCD-Kamera ausgestaltet ist. Alternativ können auch Zeilensensoren oder rasternde Fotosensoren vorgesehen sein. Weiter umfasst das Lesegerät 20 eine Probenhalterung 23, die vorzugsweise an der Innenseite einer schwenkbaren Tür 24 in einer Stirnseite des Gerätes 20 angeordnet ist. Die Haltevorrichtung 23 der gezeigten Ausführungsform umfasst eine an der schwenkbaren Tür festgelegte Halterung zur Aufnahme einer in Figur 3 zusammen mit einem Probengefäß 10 dargestellten mobilen Haltereinheit 30.

Das in Figur 3 dargestellte Probengefäß 10 besteht im Wesentlichen aus einem großvolumigen Aufnahmebereich 12 und einem sich unten an diesen anschließenden Messbereich, der als Kapillare 11 ausgestaltet ist. An die Kapillare 11 sind seitlich Stabilisierungsflügel 13 angeformt, die die Rotationssymmetrie des Probengefäßes 10 brechen. In Figur 3 ist das Probengefäß 10 in einer Haltereinheit 30 dargestellt, die an die Stabilisierungsflügel 13 angepasste Zentrierflanken aufweist, die in Figur 3 von den an ihnen anliegenden Stabilisierungsflügeln 13 "verdeckt" sind. Durch diese Zentrierflanken wird das Probengefäß 10 beim Einführen in die Haltereinheit 30 durch deren Öffnungsring 31, der auch ein oberes Stirnsichtfenster 35 bildet, hindurch automatisch in eine reproduzierbare Orientierung gebracht. Dabei wird das Probengefäß 10 so ausgerichtet, dass durch ein sich zwischen den Schenkeln 32 der Haltereinheit 30 erstreckendes Seitensichtfenster ein unverstellter Blick auf die Kapillare 11 gewährleistet ist.

Bei der in den Figuren 1 und 2 dargestellten, bevorzugten Ausführungsform können Haltereinheit 30 und Probengefäß 10 bei geöffneter Tür 24 leicht in den Probenhalter 23 eingesetzt werden. Nachfolgendes Schließen der Tür 24 positioniert das Probengefäß 10 in Gegenüberstellung des Seitensichtfensters zum Sensor 22 und verschließt gleichzeitig das Gehäuse 21 lichtdicht.

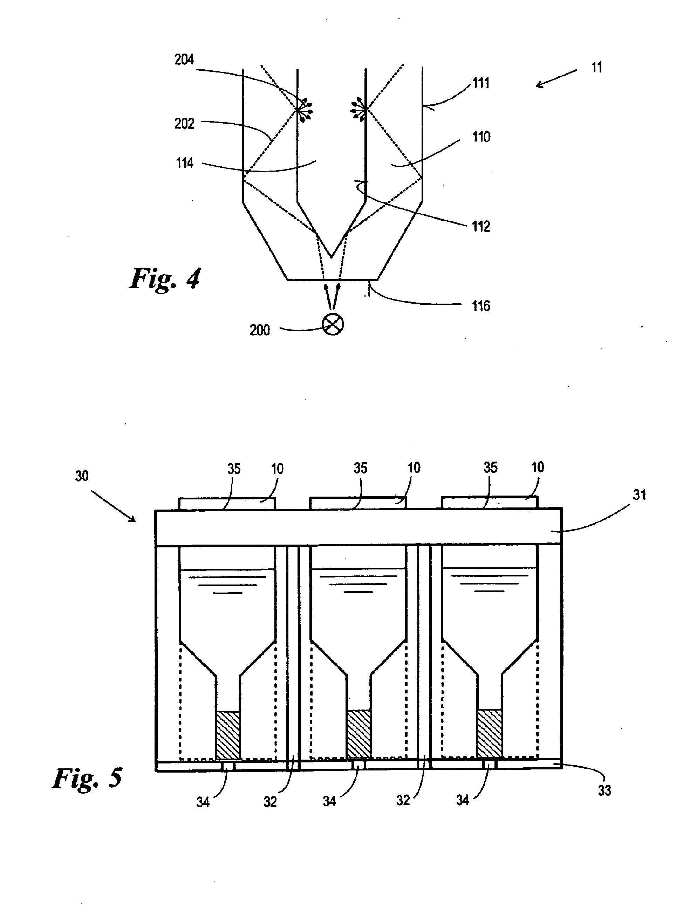

Je nach spezieller Ausgestaltung des Sensors 22 und seiner relativen Orientierung zum Probenhalter 23 ist eine Abbildungsoptik 25 vorgesehen, die wenigstens den Bereich des Probengefäßes 10, insbesondere die Kapillare 11 auf den Sensor 22 abbildet. Zur Abbildung auf den Sensor 22 wird das Probengefäß 10 im Probenhalter 23 von einer unterhalb des Probenhalters 23 angeordneten Beleuchtungsanordnung beleuchtet. Dies ist schematisch in Figur 4 dargestellt.

In Figur 4 dargestellt ist der untere Teil der Kapillare 11. Schematisch gezeigt sind die Kapillarwand 110 mit einer Außenfläche 111 und einer Innenfläche 112. Die Kapillarwand 112 umschließt den Innenbereich 114, der mit dem in Fig. 4 nicht dargestellten Zellkuchen gefüllt ist. Der Innenbereich 114 läuft bei der dargestellten Ausführungsform in einer Spitze aus, was vorwiegend herstellungstechnisch bedingt ist. Die Außenseite der Kapillarwand 110 ist im Bereich der Spitze jedoch abgeflacht und bildet eine Lichteinkoppelfläche 116, durch die Licht 202 einer Lichtquelle 200 in die Kapillarwand 110 eindringen kann. Bei korrekter Wahl von Brechungsindex und Einkoppelwinkel, die der Fachmann anhand von bekannten optischen Gesetzmäßigkeiten ableiten kann, erfährt das eingekoppelte Licht 202 Totalreflexion. Die Totalreflexion ist an der Außenfläche 111 der Kapillarwand aufgrund des großen Brechungsindexunterschiedes zur umgebenden Luft nahezu perfekt. An der Innenfläche 112 der Kapillarwand jedoch, die die Grenzfläche zu dem Zellkuchen darstellt, der optisch dichter als die Umgebungsluft ist, werden Teile des Lichtes 202 in den Innenraum 114 der Kapillare ausgekoppelt. Dies entspricht einer Beleuchtung der Probe. Das ausgekoppelte Licht 204 wird in der Probe gestreut und/oder wenigstens teilweise absorbiert und unter Winkeln, die keine Totalreflexion erzeugen, durch die Kapillarwand nach außen gesendet (in Fig. 4 nicht dargestellt), wo es mit dem Photodetektor 22 detektiert werden kann. Bei der gezeigten Ausführungsform dient somit die Kapillarwand 110 als Lichtleiter für das Beleuchtungslicht, das die Probe senkrecht zu Längserstreckung beleuchtet.

Alternativ oder zusätzlich ist auch eine entsprechende Beleuchtung von oben möglich, wobei der ringförmige, obere Rand des Aufnahmebereichs 12 bei geeignet flach ausgebildeter Randfläche als Einkoppelfläche dienen kann.

Figur 5 zeigt eine alternative Ausführungsform einer Haltereinheit 30 zur Aufnahme von einem oder mehreren Probengefäßen 10. Die Haltereinheit 30 besteht im Wesentlichen aus einer Deckplatte 31 mit Ausnehmungen 35, deren Durchmesser im Wesentlichen dem Außendurchmesser der Probengefäße 10 entsprechen und die obere Stirnsichtfenster 35 bilden, sowie einer Bodenplatte 33, auf der die Probengefäße 10 aufstehen. Verbunden sind die Deckplatte 31 und die Bodenplatte 33 durch Schenkel 32, die bei einer bevorzugten Ausführungsform der Erfindung eine optische Isolierung zwischen den einzelnen Probengefäßen 10 darstellen. Die Vorder- und/oder Rückseite der Haltereinheit 30 bleibt vorzugsweise frei, um als Seitensichtfenster zu dienen und eine Beobachtung zu ermöglichen. Stirnsichtfenster 34 in der Bodenplatte 33, die auch bei der Ausführungsform der Figur 3 vorgesehen, dort aber nicht erkennbar sind, erlauben eine Beleuchtung parallel zur Erstreckungsrichtung der Probengefäße 10.

Die Haltereinheit 30 kann eine beliebige Anzahl von Kammern zur Aufnahme von Probengefäßen 10 umfassen. Die einzelnen Kammern sind vorzugsweise so dimensioniert, dass auch herkömmliche Zentrifugationsröhrchen darin abgestellt werden können. Bei einer besonders günstigen Ausführungsform der Haltereinheit 30 ist diese so gestaltet, dass sie in handelsübliche Zentrifugen eingesetzt werden kann. Auf diese Weise wird es ermöglicht, mehrere Probengefäße 10 gleichzeitig in eine Zentrifuge einzustellen, zu entnehmen und ohne weiteren Handhabungsschritt in das Lesegerät 20 einzustellen.

Die Beleuchtung der Proben erfolgt vorzugsweise durch eine Anordnung einer oder mehreren Leuchtdioden. Alternativ oder zusätzlich können andere Einkopplungsmöglichkeiten für andere oder weitere Lichtquellen gegeben sein. Beispielsweise können externe Lichtquellen, wie beispielsweise externe Laser, über Spiegel oder Glasfasern eingekoppelt werden. Das Vorsehen verschiedener Einkopplungsmöglichkeiten, insbesondere unter Verwendung von Standardkomponenten, ermöglicht einen einfachen und variablen Einsatz des Gerätes 20 für unterschiedliche Farbstoffe und Beleuchtungserfordernisse.

Alternativ zu dem dargestellten Probenhalter 23 kann auch eine Mehrzahl von Probenhaltern vorgesehen sein, insbesondere solche, die zur Aufnahme der zuvor beschriebenen Halter 30 geeignet sind, wobei günstigerweise ein manueller oder motorischer Antrieb vorgesehen ist, der einen automatisierten Probenvorschub und eine automatisierte Probenauswertung erlaubt.

Der Sensor 22 ist vorzugsweise mit einer digitalen Datenverarbeitungseinrichtung gekoppelt. Dabei kann es sich um einen externen Rechner oder auch um einen Mikroprozessor handeln, der in dem Gehäuse 21 angeordnet ist. Die Datenverarbeitungseinheit nimmt die von dem Sensor erzeugten, digitalen Bilder auf und führt sie einem Auswertungsprozess nach vorgegebenen Regeln zu. Hierzu sind dem Fachmann geeignete Bildverarbeitungsalgorithmen bekannt.

Natürlich stellen die in der speziellen Beschreibung diskutierten und in den Figuren dargestellten Ausführungsformen nur vorteilhafte Ausführungsbeispiele der vorliegenden Erfindung dar. Dem Fachmann ist ein breites Spektrum an Variationsmöglichkeiten an Hand gegeben. Insbesondere die konkrete Ausgestaltung des Probengefäßhalters bzw. seiner Haltereinheit 30, die Auswahl der zu verwendenden Probengefäße und die zu benutzenden Bildverarbeitungsalgorithmen ebenso wie die spezielle Sensortechnik können vom Fachmann an die Erfordernisse des Einzelfalls angepasst werden.

## Patentansprüche

1. Verfahren zum bildgebenden Erfassen einer Probe in einem wenigstens bereichsweise transparenten, länglich erstreckten Probengefäß (10) mittels einer Detektionsanordnung, die umfasst:
- einen Probengefäßhalter (23, 30) zur stabilen Halterung des Probengefäßes (10) in einem Gehäuse (21), wobei der Probengefäßhalter (23, 30) im Bereich wenigstens einer Längsseite des Probengefäßes (10) ein die Längsseite wenigstens bereichsweise freigebendes Seitensichtfenster sowie im Bereich wenigstens einer Stirnseite des Probengefäßes (10) ein diese Stirnseite wenigstens bereichsweise freigebendes Stirnsichtfenster (34, 35) aufweist,
- eine wenigstens eine Lichtquelle (200) umfassende erste Beleuchtungsanordnung zum Beleuchten des Probengefäßes (10), wobei die Lichtquelle (200) dem Stirnsichtfenster (34, 35) benachbart angeordnet ist und das Probengefäß mittels der Lichtquelle (200) durch das Stirnsichtfenster (34) beleuchtbar ist,
- einen bildgebenden Photodetektor (22) zur wenigstens bereichsweisen, bildgebenden Erfassung des aufgrund der Beleuchtung von der Probe bzw. dem Probengefäß (10) durch ein Seitensichtfenster ausgehenden Lichtes,
- eine digitale Datenverarbeitungseinheit zur Bildverarbeitung und Steuerung des Photodetektors (22),
**dadurch gekennzeichnet,**
**dass** eine zweite Beleuchtungsanordnung mit wenigstens einer Lichtquelle vorgesehen ist, mittels der das Probengefäß (10) durch ein Seitensichtfenster hindurch beleuchtbar ist, und wobei das Verfahren die Schritte umfasst:
- Beleuchtendes Probengefäßes mit der Probe (10) mittels der ersten Beleuchtungsanordnung,
- Aufnehmen eines ersten Bildes des mittels der ersten Beleuchtungsanordnung beleuchteten Probengefäßes (10) mit der Probe mittels des Photodetektors (22),
- Beleuchten des Probengefäßes mit der Probe (10) mittels der zweiten Beleuchtungsanordnung,
- Aufnehmen eines zweiten Bildes des mittels der zweiten Beleuchtungsanordnung beleuchteten Probengefäßes (10) mit der Probe mittels des Photodetektors (22),
- Überlagern des ersten und des zweiten Bildes mittels der digitalen Datenverarbeitungseinrichtung und
- Darstellen des resultierenden Überlagerungsbildes auf einer mit der digitalen Datenverarbeitungseinrichtung verbundenen Anzeigeeinrichtung.

2. Verfahren nach Anspruch 1,
**dadurch gekennzeichnet,**
**dass** in der Datenverarbeitungseinrichtung Bildverarbeitungsalgorithmen auf dem ersten Bild ausgeführt werden und deren Ergebnisse als graphische Elemente in das angezeigte Überlagerungsbild mit eingeblendet werden.

3. Detektionsvorrichtung zum bildgebenden Erfassen einer Probe in einem wenigstens bereichsweise transparenten, länglich erstreckten Probengefäß (10), umfassend:
- einen Probengefäßhalter (23, 30) zur stabilen Halterung des Probengefäßes (10) in einem Gehäuse (21), wobei der Probengefäßhalter (23, 30) im Bereich wenigstens einer Längsseite des Probengefäßes (10) ein die Längsseite wenigstens bereichsweise freigebendes Seitensichtfenster sowie im Bereich wenigstens einer Stirnseite des Probengefäßes (10) ein diese Stirnseite wenigstens bereichsweise freigebendes Stirnsichtfenster (34, 35) aufweist,
- eine wenigstens eine Lichtquelle (200) umfassende erste Beleuchtungsanordnung zum Beleuchten des Probengefäßes (10), wobei die Lichtquelle (200) dem Stirnsichtfenster (34, 35) benachbart angeordnet ist und das Probengefäß mittels der Lichtquelle (200) durch das Stirnsichtfenster (34) beleuchtbar ist,
- einen bildgebenden Photodetektor (22) zur wenigstens bereichsweisen, bildgebenden Erfassung des aufgrund der Beleuchtung von der Probe bzw. dem Probengefäß (10) durch ein Seitensichtfenster ausgehenden Lichtes,
- eine digitale Datenverarbeitungseinheit zur Bildverarbeitung und Steuerung des Photodetektors (22),
**dadurch gekennzeichnet,**
**dass** eine zweite Beleuchtungsanordnung mit wenigstens einer Lichtquelle vorgesehen ist, mittels der das Probengefäß (10) durch ein Seitensichtfenster hindurch beleuchtbar ist,
und **dass** der Photodetektor (22) derart angesteuert wird, dass er
- ein erstes Bild des mittels der ersten Beleuchtungsanordnung beleuchteten Probengefäßes (10) mit der probe aufnimmt,
- ein zweites Bild der mittels der zweiten Beleuchtungsanordnung beleuchteten Probengefäßes (10) mit der Probe aufnimmt und die digitale Datenverarbeitungseinheit
- das erste und das zweite Bild überlagert und
- ein resultierendes Überlagerungsbild auf einer mit ihr verbundenen Anzeigeeinrichtung darstellt.

4. Detektionsvorrichtung nach Anspruch 3,
**dadurch gekennzeichnet,**
**dass** der Probengefäßhalter (30) im Bereich der unteren Stirnseite des Probengefäßes (10) ein die untere Stirnseite wenigstens bereichsweise freigebendes erstes Stirnsichtfenster (34) aufweist und wenigstens eine Lichtquelle (200) der ersten Beleuchtungsanordnung dem ersten Stirnsichtfenster (34) benachbart angeordnet ist, mittels der das Probengefäß durch das erste Stirnsichtfenster (34) beleuchtbar ist.

5. Detektionsvorrichtung nach einem der Ansprüche 3 oder 4,
**dadurch gekennzeichnet,**
**dass** der Probengefäßhalter (30) im Bereich der oberen Stirnseite des Probengefäßes (10) ein die obere Stirnseite wenigstens bereichsweise freigebendes zweites Stirnsichtfenster (35) aufweist und dem zweiten Stirnsichtfenster (35) benachbart eine Lichtquelle der ersten Beleuchtungsanordnung angeordnet ist, mittels der das Probengefäß durch das zweite Stirnsichtfenster (34) beleuchtbar ist.

6. Detektionsvorrichtung nach einem der Ansprüche 3 bis 5,
**dadurch gekennzeichnet,**
**dass** wenigstens eine Lichtquelle (200) eine LED ist.

7. Detektionsvorrichtung nach einem der Ansprüche 3 bis 6,
**dadurch gekennzeichnet,**
**dass** wenigstens eine Lichtquelle ein Ausgang eines Lichtleiters ist, der an eine externe Lichterzeugungsvorrichtung anschließbar ist.

8. Detektionsvorrichtung nach einem der Ansprüche 3 bis 7,
**dadurch gekennzeichnet,**
**dass** der Probengefäßhalter (23, 30) an eine nichtradialsymmetrische Form des Probengefäßes angepasste Zentrierflanken aufweist.

9. Detektionsvorrichtung nach einem der Ansprüche 3 bis 8,
**dadurch gekennzeichnet,**
**dass** der Probengefäßhalter (30) eine Mehrzahl von Aufnahmebereichen zur Aufnahme je eines Probengefäßes (10) aufweist und jeder Aufnahmebereich mit einem ersten Stirnsichtfenster (34) und wenigstens einem Seitensichtfenster ausgestattet ist.

10. Detektionsvorrichtung nach Anspruch 9,
**dadurch gekennzeichnet,**
**dass** jedem Aufnahmebereich wenigstens eine Lichtquelle der ersten Beleuchtungsanordnung zur Beleuchtung des jeweiligen Probengefäßes durch ein zugeordnetes Stirnsichtfenster (34, 35) zugeordnet ist.

11. Detektionsvorrichtung nach Anspruch 9
**dadurch gekennzeichnet,**
**dass** der Probengefäßhalter (30) zur Ausrichtung der Aufnahmebereiche motorisch bewegbar ist.

12. Detektionsvorrichtung nach einem der Ansprüche 9 bis 11,
**dadurch gekennzeichnet,**
**dass** die Aufnahmebereiche linear nebeneinander angeordnet sind.

13. Detektionsvorrichtung nach einem der Ansprüche 9 bis 12,
**dadurch gekennzeichnet,**
**dass** die Aufnahmebereiche ringförmig angeordnet sind.

## Claims

1. Method for image-providing detection of a sample in at least one regionally transparent elongate sample vessel (10) by means of a detection arrangement which comprises:
- a sample vessel holder (23, 30) for stable mounting of the sample vessel (10) in a housing (21), wherein the sample vessel holder (23, 30) has in the region of at least one longitudinal side of the sample vessel (10) a side viewing window, which exposes the longitudinal side at least regionally, as well as in the region of least one end face of the sample vessel (10) an end viewing window (34, 35), which exposes this end face at least regionally,
- a first lighting arrangement, which comprises at least one light source (200), for illuminating the sample vessel (10), wherein the light source (200) is arranged adjacent to the end viewing window (34, 35) and the sample vessel can be illuminated by means of the light source (200) via the end viewing window (34),
- an image-providing photodetector (22) for at least regional image-providing detection of the light issuing through a side viewing window due to illumination of the sample or the sample vessel (10) and
- a digital data processing unit for image processing and control of the photodetector (22),
**characterised in that** a second lighting arrangement with at least one light source is provided, by means of which the sample vessel (10) can be illuminated through a side viewing window, and wherein the method comprises the steps:
- illuminating the sample vessel together with the sample (10) by means of the first lighting arrangement,
- recording a first image of the sample vessel (10) together with the sample, which are illuminated by means of the first lighting arrangement, by means of the photodetector (22),
- illuminating the sample vessel together with the sample (10) by means of the second lighting arrangement,
- recording a second image of the sample vessel (10) together with the sample, which are illuminated by means of the second lighting arrangement, by means of the photodetector (22),
- superimposing the first and the second image by means of the digital data processing equipment and
- representing the resulting superimposition image on a display device connected with the digital data processing equipment.

2. Method according to claim 1, **characterised in that** image processing algorithms are carried out on the first image in the data processing equipment and the results thereof are inserted as graphical elements into the displayed superimposition image.

3. Detection device for image-providing detection of a sample in at least one regionally transparent elongate sample vessel (10), comprising:
- a sample vessel holder (23, 30) for stable mounting of the sample vessel (10) in a housing (21), wherein the sample vessel holder (23, 30) has in the region of at least one longitudinal side of the sample vessel (10) a side viewing window, which exposes the longitudinal side at least regionally, as well as in the region of least one end face of the sample vessel (10) an end viewing window (34, 35), which exposes this end face at least regionally,
- a first lighting arrangement, which comprises at least one light source (200), for illuminating the sample vessel (10), wherein the light source (200) is arranged adjacent to the end viewing window (34, 35) and the sample vessel can be illuminated by means of the light source (200) via the end viewing window (34),
- an image-providing photodetector (22) for at least regional image-providing detection of the light issuing through a side viewing window due to illumination of the sample or the sample vessel (10) and
- a digital data processing unit for image processing and control of the photodetector (22),
**characterised in that** a second lighting arrangement with at least one light source is provided, by means of which the sample vessel (10) can be illuminated through a side viewing window, and that the photodetector (22) is controlled in drive in such a manner that it
- records a first image of the sample vessel (10) together with the sample, which are illuminated by means of the first lighting arrangement,
- and records a second image of the sample vessel (10) together with the sample, which are illuminated by means of the second lighting arrangement, and the digital processing unit
- superimposes the first and the second image and
- represents a resulting superimposition image on a display device connected therewith.

4. Detection device according to claim 3, **characterised in that** the sample vessel holder (30) has in the region of the lower end face of the sample vessel (10) a first end viewing window (34), which exposes the lower end face at least regionally, and at least one light source (200) of the first lighting arrangement is arranged adjacent to the first end viewing window (34), by means of which the sample vessel can be illuminated via the first end viewing window (34).

5. Detection device according to one of claims 3 and 4, **characterised in that** the sample vessel holder (30) has in the region of the upper end face of the sample vessel (10) a second end viewing window (35), which exposes the upper end face at least regionally, and the second end viewing window (35) is arranged adjacent to a light source of the first lighting arrangement, by means of which the sample vessel can be illuminated via the second end viewing window (34).

6. Detection device according to any one of claims 3 to 5, **characterised in that** at least one light source (200) is an LED.

7. Detection device according to any one of claims 3 to 6, **characterised in that** at least one light source is an output of an optical waveguide, which is connectible with an external light generating device.

8. Detection device according to any one of claims 3 to 7, **characterised in that** the sample vessel holder (23, 30) has centring flanks matched to a non-radially-symmetrical form of the sample vessel.

9. Detection device according to any one of claims 3 to 8, **characterised in that** the sample vessel holder (30) has a plurality of recording regions each for recording a respective sample vessel (10) and each recording region is equipped with a first end viewing window (34) and at least one side viewing window.

10. Detection device according to claim 9, **characterised in that** at least one light source of the first lighting arrangement is associated with each recording region for illuminating the respective sample vessel via an associated end viewing window (34, 35).

11. Detection device according to claim 9, **characterised in that** the sample vessel holder (30) is movable by motor for alignment of the recording regions.

12. Detection device according to any one of claims 9 to 11, **characterised in that** the recording regions are arranged linearly adjacent to one another.

13. Detection device according to any one of claims 9 to 12, **characterised in that** the recording regions are arranged annularly.

## Revendications

1. Procédé de saisie génératrice d'image d'un échantillon dans un tube d'essai (10) oblong au moins partiellement transparent, au moyen d'un dispositif de détection comprenant :
- un support de tube d'essai (23, 30) pour un maintien stable du tube d'essai (10) dans un boîtier (21), ledit support de tube d'essai (23, 30) comportant une fenêtre latérale dans la région d'au moins une longueur du tube d'essai (10), ouvrant au moins partiellement ladite longueur, ainsi qu'une fenêtre frontale (34, 35) dans la région d'au moins un côté frontal du tube d'essai (10), ouvrant au moins partiellement ledit côté frontal,
- un premier dispositif d'éclairage pour l'éclairage du tube d'essai (10), comprenant au moins une source lumineuse (200), ladite source lumineuse (200) étant contiguë à la fenêtre frontale (34, 35), et le tube d'essai étant éclairable par la source lumineuse (200) au travers de la fenêtre frontale (34),
- un photodétecteur (22) générateur d'image, pour la saisie génératrice d'image, au moins partielle de la lumière sortant par une fenêtre latérale suite à l'éclairage de l'échantillon ou du tube d'essai (10),
- une unité numérique de traitement des données pour le traitement d'image et la commande du photodétecteur (22),
**caractérisé**
**en ce qu'**il est prévu un deuxième dispositif d'éclairage avec au moins une source lumineuse, au moyen duquel le tube d'essai (10) est éclairable au travers d'une fenêtre latérale,
et **en ce que** le procédé comprend les étapes :
- d'éclairage du tube d'essai (10) avec l'échantillon au moyen du premier dispositif d'éclairage,
- d'enregistrement au moyen du photodétecteur (22) d'une première image du tube d'essai (10) avec l'échantillon éclairé au moyen du premier dispositif d'éclairage,
- d'éclairage du tube d'essai (10) avec l'échantillon au moyen du deuxième dispositif d'éclairage,
- d'enregistrement au moyen du photodétecteur (22) d'une deuxième image du tube d'essai (10) avec l'échantillon éclairé au moyen du deuxième dispositif d'éclairage,
- de superposition de la première et de la deuxième image au moyen du dispositif numérique de traitement des données,
et
- de représentation de l'image en superposition obtenue sur un dispositif d'affichage relié au dispositif numérique de traitement des données.

2. Procédé selon la revendication 1, **caractérisé en ce que** des algorithmes de traitement des données sont exécutés sur la première image dans le dispositif numérique de traitement des données, et leurs résultats incrustés en tant qu'éléments graphiques dans l'image en superposition affichée.

3. Dispositif de détection pour la saisie génératrice d'image d'un échantillon dans un tube d'essai (10) oblong au moins partiellement transparent, comprenant :
- un support de tube d'essai (23, 30) pour un maintien stable du tube d'essai (10) dans un boîtier (21), ledit support de tube d'essai (23, 30) comportant une fenêtre latérale dans la région d'au moins une longueur du tube d'essai (10), ouvrant au moins partiellement ladite longueur, ainsi qu'une fenêtre frontale (34, 35) dans la région d'au moins un côté frontal du tube d'essai (10), ouvrant au moins partiellement ledit côté frontal,
- un premier dispositif d'éclairage pour l'éclairage du tube d'essai (10), comprenant au moins une source lumineuse (200), ladite source lumineuse (200) étant contiguë à la fenêtre frontale (34, 35), et le tube d'essai étant éclairable par la source lumineuse (200) au travers de la fenêtre frontale (34),
- un photodétecteur (22) générateur d'image, pour la saisie génératrice d'image, au moins partielle de la lumière sortant par une fenêtre latérale suite à l'éclairage de l'échantillon ou du tube d'essai (10),
- une unité numérique de traitement des données pour le traitement d'image et la commande du photodétecteur (22),
**caractérisé**
**en ce qu'**il est prévu un deuxième dispositif d'éclairage avec au moins une source lumineuse, au moyen duquel le tube d'essai (10) est éclairable au travers d'une fenêtre latérale,
et **en ce que** le photodétecteur (22) est commandé de manière à
- enregistrer une première image du tube d'essai (10) avec l'échantillon éclairé au moyen du deuxième dispositif d'éclairage,
- enregistrer une deuxième image du tube d'essai (10) avec l'échantillon éclairé au moyen du premier dispositif d'éclairage, et en ce que l'unité numérique de traitement des données
- superpose la première et la deuxième image et,
- représente une image en superposition obtenue sur un dispositif d'affichage qui lui est relié.

4. Dispositif de détection selon la revendication 3, **caractérisé en ce que** le support de tube d'essai (30) comporte une première fenêtre frontale (34) dans la région du côté frontal inférieur du tube d'essai (10), ouvrant au moins partiellement ledit côté frontal inférieur, et **en ce qu'**au moins une source lumineuse (200) du premier dispositif d'éclairage, au moyen duquel le tube d'essai est éclairable au travers de la première fenêtre frontale (34), est contiguë à ladite première fenêtre frontale (34).

5. Dispositif de détection selon l'une des revendications 3 ou 4, **caractérisé en ce que** le support de tube d'essai (30) comporte une deuxième fenêtre frontale (35) dans la région du côté frontal supérieur du tube d'essai (10), ouvrant au moins partiellement ledit côté frontal supérieur, et **en ce qu'**au moins une source lumineuse du premier dispositif d'éclairage, au moyen duquel le tube d'essai est éclairable au travers de la deuxième fenêtre frontale (34), est contiguë à ladite deuxième fenêtre frontale (35).

6. Dispositif de détection selon l'une des revendications 3 à 5, **caractérisé en ce qu'**au moins une source lumineuse (200) est une diode électroluminescente.

7. Dispositif de détection selon l'une des revendications 3 à 6, **caractérisé en ce qu'**au moins une source lumineuse est une sortie d'un conduit de lumière raccordable à un dispositif générateur de lumière externe.

8. Dispositif de détection selon l'une des revendications 3 à 7, **caractérisé en ce que** le support de tube d'essai (23, 30) comporte des flancs de centrage ajustés à une forme du tube d'essai qui n'est pas à symétrie radiale.

9. Dispositif de détection selon l'une des revendications 3 à 8, **caractérisé en ce que** le support de tube d'essai (30) comporte une pluralité de zones de réception pour le logement d'un tube d'essai (10) chacune, et **en ce que** chaque zone de réception est pourvue d'une première frontale (34) et d'au moins une fenêtre latérale.

10. Dispositif de détection selon la revendication 9, **caractérisé en ce qu'**à chaque zone de réception est attribuée au moins une source lumineuse du premier dispositif d'éclairage pour l'éclairage de chaque tube d'essai au travers d'une fenêtre frontale (34, 35) correspondante.

11. Dispositif de détection selon la revendication 9, **caractérisé en ce que** le support de tube d'essai (30) est déplaçable par moteur pour l'alignement des zones de réception.

12. Dispositif de détection selon l'une des revendications 9 à 11, **caractérisé en ce que** les zones de réception sont disposées linéairement l'une à côté de l'autre.

13. Dispositif de détection selon l'une des revendications 9 à 12, **caractérisé en ce que** les zones de réception sont disposées en anneau.
